## Europäisches Patentamt
## European Patent Office
## Office européen des brevets

(19)

(11) Veröffentlichungsnummer: **0 184 839**
**B1**

(12)

# EUROPÄISCHE PATENTSCHRIFT

(45) Veröffentlichungstag der Patentschrift:
08.03.89

(51) Int. Cl.⁴: **B 23 K 26/00**

(21) Anmeldenummer: **85115810.5**

(22) Anmeldetag: **11.12.85**

(54) **Verfahren und Vorrichtung zur spanlosen Herstellung schmaler, länglicher Werkstücke aus Metall mittels Laserstrahls.**

(30) Priorität: **14.12.84 DE 3445613**

(43) Veröffentlichungstag der Anmeldung:
**18.06.86 Patentblatt 86/25**

(45) Bekanntmachung des Hinweises auf die Patenterteilung:
**08.03.89 Patentblatt 89/10**

(84) Benannte Vertragsstaaten:
**FR GB**

(56) Entgegenhaltungen:
**US-A-4 177 372**
**US-A-4 243 867**
**US-A-4 464 557**

(73) Patentinhaber: **Wisotzki, Jürgen, Weserstrasse 7a, D-6074 Rödermark (DE)**

(72) Erfinder: **Wisotzki, Jürgen, Weserstrasse 7a, D-6074 Rödermark (DE)**

(74) Vertreter: **Jochem, Bernd, Dipl.- Wirtsch.- Ing., Patentanwälte Beyer & Jochem Postfach 17 01 45, D-6000 Frankfurt/Main (DE)**

LIBER, STOCKHOLM 1989

## Beschreibung

Die Erfindung betrifft ein Verfahren zur spanlosen Herstellung sehr dünner oder schmaler Werkstücke mit Querabmessungen von weniger als 1 mm aus Metall oder Legierungen mittels kontinuierlichen Laserstrahls unter Vakuum oder Schutzgas.

Kleine elektronische Bauteile und Verbindungen aus Metall oder Legierungen, z. B. Heizwendeln und andere kleine Werkstücke mit einer Dicke oder einem Durchmesser im Mikrobereich und einer Länge, die ein Vielfaches der Dicke oder des Durchmessers beträgt, wobei die Form gerade oder gekrümmt sein kann, werden nach herkömmlicher Technik z. B. aus einem Draht mechanisch geformt. Das Biegen des Drahts ist jedoch mit örtlich unterschiedlichen mechanischen Verfestigungen und Gefügeveränderungen verbunden, wodurch später im Gebrauch unter mechanischen und thermischen Belastungen Brüche verursacht werden können.

Es ist weiterhin bekannt, Werkstücke bestimmter Form mittels Laserstrahl aus dem Ausgangsmaterial auszuschneiden. Auch in diesem Fall lassen sich Gefügeveränderungen im Bereich der Schnittflächen infolge Erhitzung durch den Laserstrahl während des Schneidvorgangs nicht vermeiden.

Elektronische Bauteile, die durch Aufdampfen von Schichten oder nach bekannter Maskentechnik hergestellt werden, haben den Nachteil, daß sie fest auf einem Substratträger haften und nur zusammen mit diesem verwendbar sind.

Die Herstellung kleiner Bauteile aus Metall im Gießverfahren findet seine Grenze bei Durchmessern oder Querabständen von etwa 1 mm. Wird die Schmelze unter Druck in die Form gepreßt, lassen sich zwar kleinere Querschnitte erreichen, es treten aber wiederum, insbesondere bei gekrümmten Formen, Verspannungen auf, die später während des Betriebs die Zuverlässigkeit des Bauteils beeinträchtigen.

Der Erfindung liegt deshalb die Aufgabe zugrunde, ein Verfahren und eine Vorrichtung zu schaffen, um sehr dünne oder schmale Werkstücke aus Metall oder Legierungen mit Querabmessungen von weniger als 1 mm, aber praktisch beliebiger Länge und Krümmung, spannungsfrei und mit homogenem Gefüge herstellen zu können.

Vorstehende Aufgabe wird nach der Erfindung verfahrensmäßig durch den Gegenstand des Anspruchs 1 gelöst. Das neue Herstellungsverfahren ist somit ein kontinuierliches Schmelzverfahren, bei dem gleichzeitig geschmolzen und durch die Fortbewegung des Laserstrahls geformt wird. Bei diesem Formvorgang aus der Schmelze schreitet die Erstarrung über die Länge des Werkstücks gleichmäßig fort, so daß ein gleichmäßiges Gefüge erhalten wird und keine inneren Spannungen auftreten. Da sich ein Laserstrahl auf einen Querschnitt von weniger als 1 mm fokussieren läßt, bereitet auch die Herstellung sehr schmaler Werkstücke keine Schwierigkeiten. Der Laserstrahl wird im Auftreffpunkt auf das Schmelzgut im wesentlichen auf die dort vorhandene Breite der rinnenförmigen Bahn eingestellt, so daß das auf dem Schmelzgutträger in der rinnenförmigen Bahn liegende Pulver an jedem Punkt der Bahn auf deren gesamter Breite gleichzeitig geschmolzen wird und bei der Fortbewegung des Laserstrahlbrennpunkts längs der rinnenförmigen Bahn die Schmelze auf deren gesamter Breite gleichzeitig erstarrt.

Je nach der Gestalt des herzustellenden Werkstücks können Tiefe und Breite der rinnenförmigen Bahn über die Länge des Werkstücks variiert werden, denn durch Änderung des Abstands des Brennpunkts vom Schmelzgut kann der Querschnitt des Laserstrahls entsprechend der sich ändernden Breite der rinnenförmigen Bahn verändert werden. In gleicher Weise kann, während der Laserstrahl dem geraden oder gekrümmten Verlauf einer rinnenförmigen Bahn folgt, die Bahngeschwindigkeit des Laserstrahls innerhalb vorgegebener Grenzen verändert werden, falls dies z. B. wegen örtlicher Änderungen des zu schmelzenden pulverförmigen Materials oder der Tiefe der rinnenförmigen Bahn zweckmäßig erscheint.

Wie ohne weiteres ersichtlich, ist das neue Verfahren nicht auf die Herstellung von Werkstücken aus einzelnen reinen Metallen beschränkt, sondern kann auch Anwendung finden bei Legierungen, wobei das zu schmelzende pulverisierte Ausgangsmaterial eine pulverisierte Legierung oder eine Mischung aus Pulvern der zu legierenden Metalle sein kann. Dabei besteht auch die Möglichkeit, beim Fortschreiten des Laserstrahls längs der rinnenförmigen Bahn zunächst ein erstes Metallpulver zu schmelzen und dann ab einer bestimmten Grenzstelle ein anderes Metallpulver, wobei an der Grenzstelle die beiden unterschiedlichen Schmelzen zusammenfließen und verschweißen.

Die erfindungsgemäße Vorrichtung zur Durchführung des neuen Verfahrens ist in Anspruch 2 aufgeführt.

Die hierzu erforderliche Optik wird besonders einfach bei Verwendung eines bewegbaren asphärischen Spiegels, welcher den Laserstrahl auf einen Punkt der rinnenförmigen Bahn des Schmelzgutträgers umlenkt und dabei gleichzeitig fokussiert. Zweckmäßigerweise ist der asphärische Spiegel um wenigstens eine Schwenkachse drehbar gelagert und/oder längs wenigstens einer Geradführung bewegbar gelagert.

Um einwandfreie Werkstücke und Gefüge zu erhalten, wird in praktischer Ausführung der Erfindung der Schmelzgutträger in einer oben durch ein Fenster begrenzten Hochvakuumkammer angeordnet, welches der auf das Schmelzgut gerichtete Laserstrahl durchdringt.

Für das Schmelzen des pulvrigen Schmelzguts längs einer vorgegebenen rinnenförmigen Bahn mittels eines Laserstrahls kommt es nur auf die Relativbewegung zwischen dem Schmelzgutträger und dem Laserstrahl an. Es genügt also, wenn entweder nur der Laserstrahl, z. B. durch Bewegung des asphärischen Spiegels, bewegt wird oder alternativ der Laserstrahl ortsfest im Raum gehalten wird, während der Schmelzgutträger bewegt wird. Um mit verhältnismäßig kleinen Bewegungsbereichen auszukommen, ist vorzugsweise vorgesehen, daß sowohl der Laserstrahl mittels einer steuerbaren Optik als auch der Schmelzgutträger bewegbar ist.

Das vorgeschlagene Herstellungsverfahren sollte möglichst erschütterungsfrei durchgeführt werden. Es empfiehlt sich daher, die gesamte Vorrichtung auf Luftlagern ruhen zu lassen.

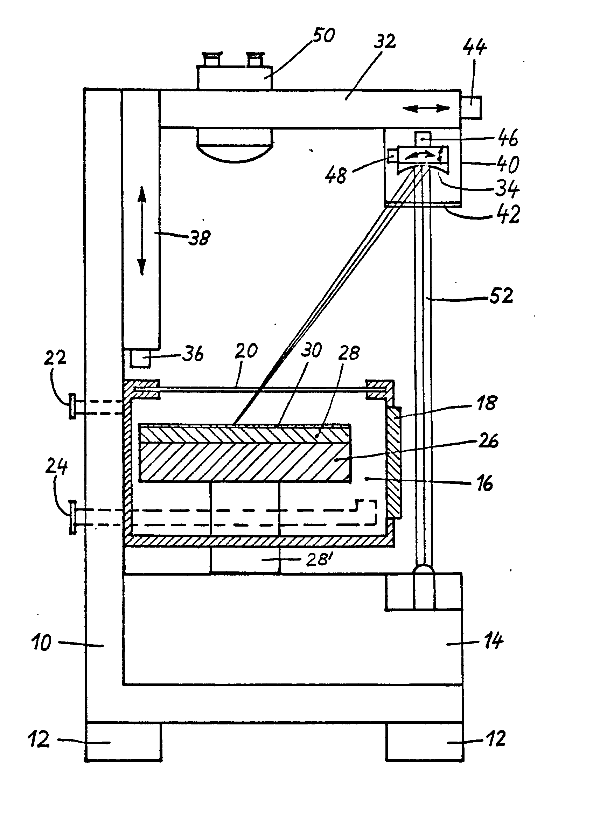

Die Erfindung wird nachstehend anhand der Zeichnung näher erläutert. Diese zeigt eine erfindungsgemäße Vorrichtung, bestehend aus einem Rahmen 10, der auf Luftlagern 12 ruht und einen CW-$CO_2$-Laser 14 trägt. Weiterhin ist am Rahmen 10 eine Hochvakuumkammer 16 befestigt, die nach dem Öffnen eines Deckels 18 von außen zugänglich ist und auf der Oberseite durch ein Fenster 20, z. B. aus NaCl begrenzt ist. Die Hochvakuumkammer 16 hat einen Vakuumanschluß 22 und eine Einlaßöffnung 24 für Schutzgas. Im Inneren der Hochvakuumkammer 16 ist ein Tisch 26 drehbar gelagert und mittels eines Antriebsmotors 28' drehbar. Auf dem Tisch ruht eine auswechselbare plattenförmige Schablone 28, welche auf ihrer Oberseite flach eingesenkte, rinnenförmige Bahnen in der Form der herzustellenden Werkstücke aufweist. Breite und Tiefe dieser rinnenförmigen Bahnen betragen vorzugsweise weniger als etwa 1 mm, können aber ggf. auch etwas größer sein. Auf die Oberfläche der Schablone 28 wird wenigstens im Bereich einer oder mehrerer rinnenförmiger Bahnen Metallpulver, z. B. aus Kupfer, Silber oder einem anderen Metall, aus dem das Werkstück hergestellt werden soll, in einer dünnen Schicht 30 aufgetragen. Derartige Metallpulver feiner Körnung von z. B. 100µ stehen zur Verfügung. Die Dicke der Pulverschicht 30 und die Tiefe der rinnenförmigen Bahnen richten sich nach der Dicke der herzustellenden Werkstücke.

An einem sich über der Hochvakuumkammer 16 erstreckenden Tragarm 32 des Rahmens 10 ist ein asphärischer Spiegel 34 mehrfach beweglich gelagert und geführt. Der Tragarm 32 selbst ist nach Art eines Schlittens mittels eines Stellmotors 36 längs einer senkrechten Führung 38 am Rahmen 10 vertikal verfahrbar. Ein den Spiegel 34 aufnehmendes abgeschlossenes Gehäuse 40, dessen Boden durch ein Fenster 42 gebildet ist, kann mittels eines Stellmotors 44 nach Art eines Schlittens einlang einer Längsführung am Tragarm 32 verfahren werden. In dem Gehäuse 40 ist der Spiegel 34 mittels zweier Stellmotore 46 und 48 um zwei sich kreuzende waagrechte Achsen verschwenkbar.

Der Tragarm 32 des Rahmens 10 trägt weiterhin eine Beobachtungsoptik 50, die zweckmäßigerweise mit einer Temperaturmeßeinrichtung verbunden ist. Die Beobachtungsoptik gestattet die Beobachtung des Schmelzvorgangs in der Hochvakuumkammer durch das Fenster 20 hindurch, und die mit der Beobachtungsoptik 50 verbundene Temperaturmeßeinrichtung mißt die am Schmelzpunkt herrschende Temperatur anhand der durch das Fenster 20 nach außen dringenden Strahlung.

Die Funktionsweise der gezeigten Vorrichtung ist wie folgt:

Nachdem sich die mit Pulver 30 beschichtete Schablone 28 in der geschlossenen, evakuierten Hochvakuumkammer 16 befindet, die vorzugsweise aus Edelstahl besteht und wassergekühlt ist, wird der vom Laser 14 erzeugte Laserstrahl 52 auf den asphärischen Spiegel 34 gerichtet und von diesem auf die mit Metallpulver 30 belegte Schablone 28 umgelenkt und fokussiert. Der Brennpunkt befindet sich dort, wo das Metallpulver 30 in einer rinnenförmigen Bahn geschmolzen werden soll. Eine nicht gezeigte Steuereinrichtung führt den Brennpunkt des Laserstrahls langsam entlang einer rinnenförmigen Bahn in der Oberfläche der Schablone 28. Hierzu genügt es, den asphärischen Spiegel 34 um die eine und/oder die andere seiner beiden Schwenkachsen zu verschwenken und gleichzeitig durch Verfahren des Tragarms 32 in senkrechter Richtung entlang der Führung 38 dafür zu sorgen, daß sich der Brennpunkt des Laserstrahls 52 beim Verschwenken des Spiegels 34 im wesentlichen in einer horizontalen Ebene bewegt.

Es versteht sich, daß der Strahlengang des Laserstrahls 52 auch anders als gezeigt gewählt werden kann. Während im gezeichneten Ausführungsbeispiel die umlenkende und fokussierende Optik mit dem asphärischen Spiegel 34 im wesentlichen senkrecht über dem Strahlaustritt des Lasers 14 angeordnet ist und der Stellmotor 44 nur der genauen Positionierung des Spiegels 34 vor Beginn des Arbeitens dient, könnte auch daran gedacht sein, während des Arbeitens das Gehäuse 40 mit dem Spiegel 34 längs des Tragarms 32 zu verfahren und den Laserstrahl 52 mittels eines steuerbaren Strahlaustritts am Laser 14 so nachzuführen, daß der Laserstrahl jederzeit auf den Spiegel 34 zielt.

Eine weitere Modifikation besteht darin, daß anstelle des asphärischen Spiegels 34 auch ein reiner Umlenkspiegel in Verbindung mit einer fokussierende Linse Verwendung finden könnte.

Der Schmelz- und Formprozeß kann gesteuert ablaufen. Man kann aber auch eine Regelung vorsehen, welche die von der Temperaturmeßeinrichtung gemessenen Temperaturen benutzt, um den Brennpunkt des Laserstrahls 52 mit optimaler Bahngeschwindigkeit längs einer rinnenförmigen Bahn der Schablone 28 zu führen.

Den Schmelzprozeß wird man normalerweise unter einem kontinuierlichen Schutzgasstrom ablaufen lassen. Das Schutzgas tritt über die Einlaßöffnung 24 in die Hochvakuumkammer 16 ein und wird durch den Vakuumanschluß 22 daraus wieder abgesaugt.

Die Geschwindigkeit, mit der sich der Brennpunkt des Laserstrahls 52 auf der Oberfläche der Schablone 28 bewegt, kann zwischen etwa 0,1 mm und ungefähr 100 mm pro Stunde betragen.

## Patentansprüche

1. Verfaren zur spanlosen Herstellung sehr dünner oder schmaler Werkstücke mit Querabmessungen von weniger als 1 mm aus Metall oder Metallegierungen mittels kontinuierlichen Laserstrahls (52) unter Vakuum oder Schutzgas, dadurch gekennzeichnet, daß eine Schicht aus Metall -oder Metallegierungspulver als Schmelzgut (30) auf einen im wesentlichen ebenen Schablone (28) aufgebracht wird, die auf ihrer Oberfäche wenigstens eine der Form des herzustellenden Werkstücks entsprechende rinnenförmige Bahn aufweist, und der Laserstrahl (52) auf die Schablone (28) gerichtet und mit solcher Geschwindigkeit entlang der rinnenförmigen Bahn geführt wird, daß in dieser das pulvrige Schmelzgut (30) kontinuierlich geschmolzen wird und die Schmelze zusammenhängend erstarrt.

2. Vorrichtung zur Durchführung des Verfahrens nach Anspruch 1, bestehend aus einem CW-Laser (14), einem Werkstückträger (28) für wenigstens ein unter Schutzgas zu haltendes Werkstück und einer den Laserstrahl relativ zum Werkstückträger (28) längs einer vorbestimmten Bahn führenden Steuereinrichtung, dadurch gekennzeichnet, daß der Werkstückträggr (28) eine im wesentlichen ebene Schablone (28) ist, die auf ihrer Oberfläche wenigstens eine der Form eines herzustellenden Werkstücks entsprechende rinnenförmige Bahn aufweist und mit einer Schicht aus Metall- oder Metallegierungspulver als Schmelzgut (30) belegbar ist, und daß der Laserstrahl (52) mittels der Steuereinrichtung mit einer zum Schmelzen des pulvrigen Schmelzguts (30) ausreichend langsamen Geschwindigkeit längs der rinnenförmigen Bahn lenkbar ist, dadurch daß der Laserstrahl durch eine durch die Steuereinrichtung bewegbare Optik (34) auf jeden Punkt längs der rinnenförmigen Bahn fokussierbar ist.

3. Vorrichtung nach Anspruch 2, dadurch gekennzeichnet, daß die Optik (34) einen mittels der Steuereinrichtung bewegbaren, asphärischen Spiegel (34) aufweist, welcher den Laserstrahl (52) auf einen Punkt der rinnenförmigen Bahn der Schablone (28) umlenkt und dabei gleichzeitig fokussiert.

4. Vorrichtung nach Anspruch 3, dadurch gekennzeichnet, daß der asphärische Spiegel (34) um wenigstens eine Schwenkachse drehbar gelagert ist.

5. Vorrichtung nach Anspruch 3 oder 4, dadurch gekennzeichnet, daß der asphärische Spiegel längs wenigstens einer Geradführung (38) bewegbar ist.

6. Vorrichtung nach einem der Ansprüche 2 bis 5, dadurch gekennzeichnet, daß die Schablone (28) in einer oben durch ein Fenster (20) begrenzten Hochvakuumkammer (16) angeordnet ist, welches der auf das Schmelzgut (30) gerichtete Laserstrahl (52) durchdringt.

7. Vorrichtung nach einem der Ansprüche 2 bis 6, dadurch gekennzeichnet, daß die Schablone (28) um eine im wesentlichen senkrechte Achse drehbar und/oder in mindestens einer Richtung parallel zu seiner Oberfläche verfahrbar ist.

8. Vorrichtung nach einem der Ansprüche 2 bis 7, dadurch gekennzeichnet, daß die Schablone (28) auswechselbar ist und auf einem tragenden Unterteil (26) befestigt ist.

## Claims

1. A method for the non-chipping production of thin or slender workpieces having transverse dimensions of less than 1 mm and consisting of metal or metal alloys, by means of a continuous laser beam (52) in vacuum or under shielding gas, characterized in that a layer of metal or metal alloy powder as a melting charge (30) is applied to an essentially planar mould (28) exhibiting on the surface thereof, at least one groove-type track conforming to the shape of the workpiece to be produced, and that the laser beam (52) is directed toward the mould (28) and is moved at a speed along the groove-type track such that the pulverulent melting charge (30) is continuously molten therein and that the melt coherently solidifies.

2. A device for carrying into effect the process of claim 1, comprising a CW laser (14), a workpiece carrier (28) for at least one workpiece to be held under shielding gas and a control means guiding the laser beam relative to the workpiece carrier (28) along a predetermined track, characterized in that the workpiece carrier (28) is an essentially planar mould (28) exhibiting on the surface thereof at least one channel-type track conforming to the shape of the workpiece to be produced, to which can be applied a layer of metal or metal alloy powder as a melting charge (30), and that the laser beam (52) by means of the control means is steerable along the grooved track at a speed sufficiently low for melting the pulverulent melting charge (30), and that the laser beam can be focussed through an optical system (34) movable through the control means, to any point along the groove-type track.

3. A device as defined in claim 2, characterized in that the optical system (34) comprises a non-spherical mirror (34) movable by means of the control means and deflecting the laser beam (52) to a point of the groove-type track of the mould (28), at the same time focussing the same.

4. A device according to claim 3, characterized in that the non-spherical mirror (34) is supported pivotally about at least one pivot axis.

5. A device according to claims 3 or 4, characterized in that the non-spherical mirror is movable along at least one linear guide (38).

6. A device according to any one of claims 2 to 5, characterized in that the mould (28) is located in a high-vacuum chamber (16) confined at the top by a window (20), penetrated by the laser beam (52) directed toward the melting charge (30).

7. A device according to any one of claims 2 to 6, characterized in that the mould (28) is rotatable about an essentially vertical axis and/or is movable in at least one direction in parallel to the surface thereof.

8. A device according to any one of claims 2 to 7, characterized in that the mould (28) is replaceable and is secured to a supporting base portion (26).

**Revendications**

1. Procédé pour la fabrication sans copeaux de pièces d'oeuvre très fines et très étroites en métal ou alliage de métaux aux dimensions transversales de moins d' 1 mm au moyen d'un rayon laser continu (52) sous vide ou sous gaz de protection, caractérisé en ce qu'une couche de poudre de métal ou de poudre d'alliage de métaux comme matière à fondre (30) est apposée sur un moule (28) essentiellement plat, qui comporte sur sa surface au moins une voie en forme de rigole correspondant à la forme de la pièce d'oevre à fabriquer, et caractérisé en ce que le rayon laser (52) est orienté sur le moule (28) et est guidé le long de la voie en forme de rigole à un vitesse telle que la matière à fondre poudreuse s'y trouvant fonde de façon continue et que la masse fondue se solidifie en un bloc.

2. Dispositif pour l'exécution du procédé selon la revendication 1 se composant d'un laser CW (14), d'un support de la pièce d'oeuvre (28) pour au moins une pièce d'oeuvre à tenir sous gaz de protection et d'un dispositif de commande guidant le rayon laser par rapport au support de la pièce d'oeuvre le long d'une voie définie caractérisé en ce que le rayon laser (52) peut être guidé au moyen d'un dispositif de commande (30) le long de la voie en forme de rigole à une vitesse suffisamment lente pour obtenir la fusion de la matière à fondre poudreuse, et caractérisé en ce que la rayon laser (52) peut être focalisé sur chacun des points le long de la voie en forme de rigole à travers une optique (34) réglable par le dispositif de commande.

3. Dispositif selon la revendication 2 caractérisé en ce que l'optique (34) comporte un miroir (34) asphérique, orientable au moyen du dispositif de commande et qui reflète le rayon laser (52) sur un point de la voie en forme de rigole du moule (28) et focalise simultanément.

4. Dispositif selon la revendication 3 caractérisé en ce que le miroir asphérique (34) peut pivoter autour d'au moins un axe.

5. Dispositif selon l'une des revendications 3 ou 4 caractérisé en ce que le miroir asphérique peut être déplacé le long d'au moins une ligne droite (38).

6. Dispositif selon l'une des revendications 2 à 5 caractérisé en ce que le moule (28) est disposé dans une chambre à vide élevé, limitée en sa partie supérieure par une fenêtre et qui est traversée par le laser (52) orienté sur la matière à fondre (30).

7. Dispositif selon l'une des revendications 2 à 6 caractérisé en ce que le moule (28) peut tourner autour d'un axe essentiellement vertical et/ou se déplacer dans au moins une direction parallèle à sa surface.

8. Dispositif selon l'une des revendications 2 à 7 caractérisé en ce que le moule (28) peut être échangé et est fixé sur un support inférieur (26).